# FASCICULE DE BREVET EUROPEEN

(11) **EP 0 685 915 B1**
(45) Date de publication et mention de la délivrance du brevet: **08.10.1997**
(21) Numéro de dépôt: 95401143.3
(22) Date de dépôt: 17.05.1995
(51) Int. Cl.: H02G 3/26

(54) **Pièce de suspension pour canalisation électrique**
Aufhängungsvorrichtung für Kabelkanal
Suspension device for electrical ducting

(30) Priorité: 02.06.1994 FR 9406864
(43) Date de publication de la demande: 06.12.1995
(73) Titulaire: SCHNEIDER ELECTRIC SA, 92100 Boulogne Billancourt (FR)
(72) Inventeur: Nourry, Daniel, F-21000 Dijon (FR)
(74) Mandataire: Saint Martin, René

(56) Documents cités:
- EP-A- 0 375 607
- DE-U- 9 103 649
- US-A- 2 984 447

## Description

La présente invention concerne une pièce de suspension pour une canalisation électrique préfabriquée comportant des pinces entre lesquelles se loge la canalisation, et une élément de fixation permettant la fixation de la canalisation à un support et/ou la fixation d'un appareil électrique à la canalisation.

De façon usuelle, une canalisation électrique est suspendue grâce à des pièces en forme de C présentant une âme centrale et deux ailes inférieure et supérieure (US-A-2 984 447). L'âme centrale est appliquée contre une paroi latérale de la canalisation et présente, vissée à elle, une patte s'accrochant sur la partie supérieure de la canalisation; l'aile inférieure supporte la partie inférieure de la canalisation, et l'aile supérieure se situe à une hauteur donnée au-dessus de la canalisation et présente un orifice permettant une fixation suspendue de la canalisation par vissage à un support.

Ce type de pièce présente toutefois l'inconvénient de ne pas permettre l'addition ultérieure de fils ou câbles complémentaires restant maintenus en place sur le dessus de la canalisation. Cette solution est en outre longue à mettre en oeuvre; elle demande notamment un premier vissage de la pièce pour sa fixation à la canalisation.

Il est aussi connu de réaliser une fixation suspendue grâce à des colliers présentant une partie médiane munie d'un orifice destiné à la suspension et deux ailes, munies chacune d'une patte d'accrochage, clipsables autour de la canalisation.

Ce type de dispositif permet aussi bien la suspension de canalisations que celle d'appareils électriques à une canalisation, réduisant ainsi le coût de revient d'une telle installation combinée.

Cependant pour la fixation suspendue d'une canalisation, à un plafond par exemple, la partie médiane du collier se situe sur le dessus de la canalisation, rendant impossible l'addition de câbles supplémentaires.

La présente invention remédie aux inconvénients précités en réalisant une pièce de suspension aisée à mettre en place autour d'une canalisation, de faible prix de revient, permettant une fixation contiguë d'appareils électriques à cette canalisation, ainsi qu'une disposition de fils supplémentaires maintenus en place sur le dessus de la canalisation.

La pièce de suspension selon l'invention est caractérisée par le fait que l'une au moins des pinces est une pince pivotante assemblée et articulée grâce à des moyens d'assemblage et de pivotement, et retenue en position de maintien sur la canalisation grâce à des moyens de verrouillage élastiques.

Ainsi la pièce est utilisée aussi bien pour la suspension d'une canalisation à un support que pour la suspension d'un appareil électrique à la canalisation.

La pièce de suspension est de préférence une pièce métallique plate obtenue par découpe. Plusieurs pièces peuvent ainsi être accolées et, par leur faible volume, disposées de façon quelconque sur la canalisation.

Les pinces comprennent une pince fixe sur laquelle est assemblée et articulée la pince pivotante.

Les moyens de verrouillage consistent de préférence en un ressort à lame appliqué sur une grande face de la pièce découpée, et en une liaison de verrouillage prévue entre le ressort et la pince pivotante pour bloquer la rotation de la pince en position de maintien.

La liaison de verrouillage comprend des crans de blocage prévus sur la pince pivotante et des pattes de verrouillage prévues sur le ressort, les pattes étant propres à s'encliqueter dans lesdits crans.

Dans une variante, la liaison de verrouillage est constituée par des crans de blocage prévus sur le ressort et des pattes de verrouillage prévues sur la pince pivotante propres à s'encliqueter dans lesdits crans.

Lorsque la pièce embrasse la canalisation, des saillies d'accrochage des pinces viennent en regard se plaquer contre la paroi supérieure de la canalisation et ménagent sur le dessus de la canalisation un espace libre adapté en position d'ouverture au passage de la canalisation et en position de maintien au logement de câbles supplémentaires.

La description faite ci-après en regard des dessins fera ressortir les caractéristiques et avantages de l'invention.

Aux dessins annexés:
- la figure 1 est une vue de profil du dessus d'une canalisation associée à des pièces de suspension ;
- la figure 2 est une vue de dessous de la figure 1 ;
- la figure 3 est une vue en élévation de la pièce de suspension selon un premier mode de réalisation ;
- la figure 4 est une vue en élévation de la pièce de suspension selon un second mode de réalisation ;
- la figure 5 est une vue éclatée de la figure 4 ;
- la figure 6 est une vue en coupe IV-IV de la figure 4.

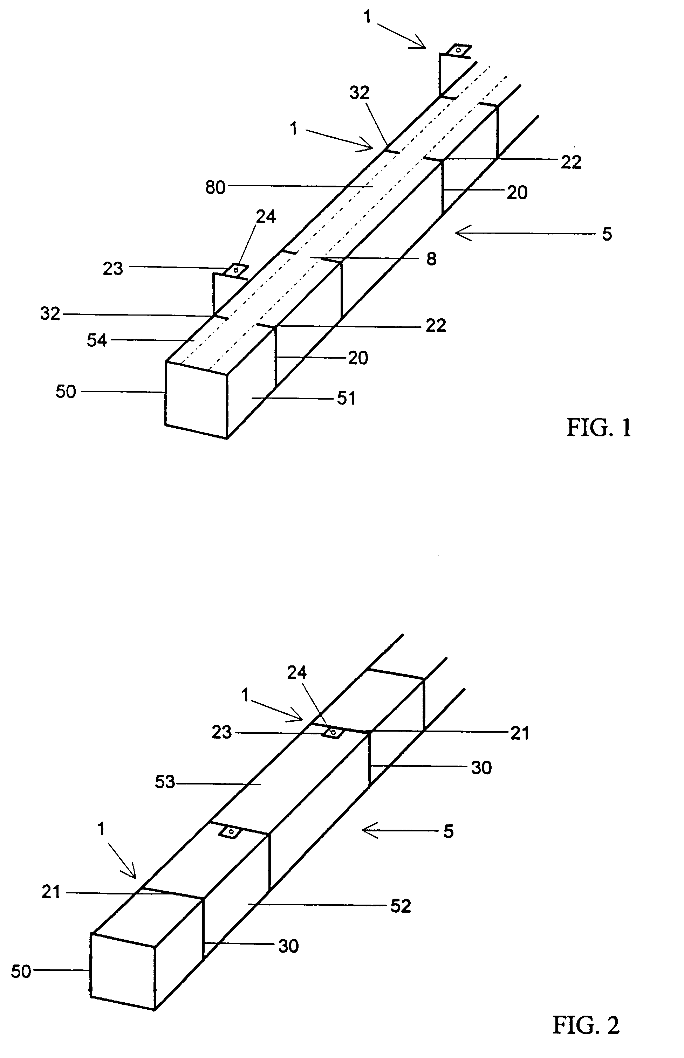

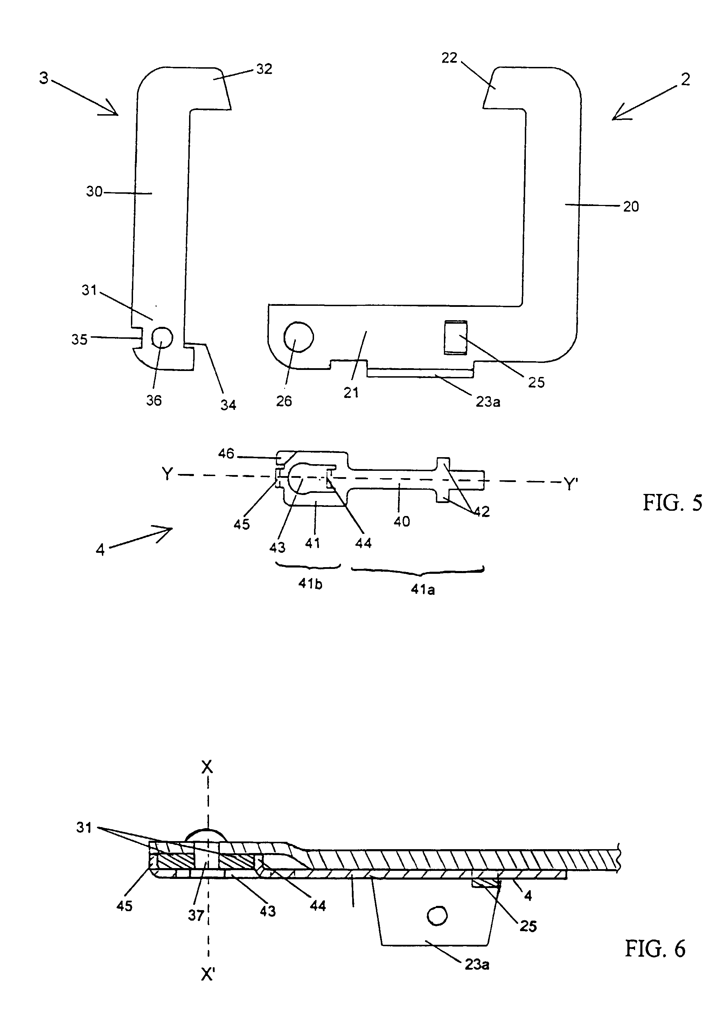

La pièce de suspension 1, repérée 1 sur les figures 1 à 5, est une pièce métallique plate obtenue par découpe et pliage. Elle est destinée à se fixer autour d'une canalisation électrique préfabriquée 5 comprenant une enveloppe métallique 50 parallélépipédique à quatre parois, latérales 51, 52, inférieure 53, et supérieure 54.

La pièce de suspension 1 présente une forme plate en étrier; elle comprend une pince fixe 2, une pince pivotante 3 articulée sur la pince fixe, et des moyens de verrouillage élastiques 4, ces moyens visant à verrouiller la pince pivotante en position de maintien sur la canalisation.

La pince fixe 2 de forme en L comprend une âme centrale 20, une aile 21, et une saillie d'accrochage 22; l'âme 20, l'aile 21, et la saillie d'accrochage 22 étant respectivement destinées à s'appuyer par leurs bords étroits contre la paroi latérale 51 ou 52 de la canalisation, à soutenir la paroi inférieure 53, et à s'appuyer sur la paroi supérieure 54.

L'aile 21 présente sur l'une des surfaces longitudinales un ressaut 25 engendrant un espace libre entre ce dernier et le plan de l'aile 21. L'aile 21 présente aussi un orifice 26 à son extrémité libre.

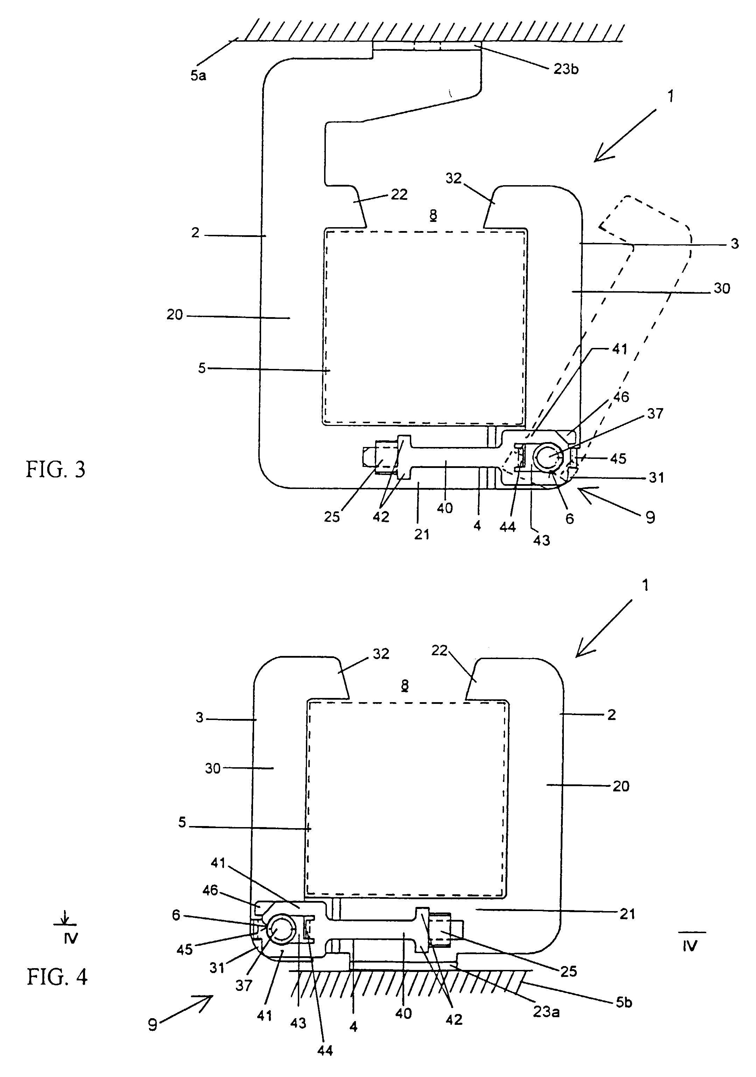

La pince fixe 2 présente enfin une élément de fixation 23 muni d'un évidement 24, solidairement à l'aile de support 21 noté 23a (figure 4), ou en prolongement à l'âme d'appui 20 repéré 23b (figure 3). L'élément 23 est destiné dans le second cas à la suspension de la canalisation à un support 5a, et dans le premier cas à la suspension d'un appareil électrique 5b à la canalisation. Lorsque la pièce de suspension est montée sur la canalisation, l'élément 23 se situe dans un plan parallèle aux parois inférieure 53 et supérieure 54 de la canalisation.

La pince pivotante 3 comprend une âme 30, ainsi qu'une saillie d'accrochage 32 et une partie d'articulation 31 respectivement situées aux extrémités de l'âme 30.

La saillie d'accrochage 32 est destinée à s'appuyer sur la paroi supérieure 54 de la canalisation en regard avec la saillie d'accrochage 22 de la pince fixe lorsque la pièce 1 embrasse la canalisation.

La partie d'articulation 31, munie d'un orifice 36, est assemblée et articulée sur l'extrémité de l'aile de support 21 grâce à des moyens d'assemblage et de pivotement 6. Ces moyens consistent de préférence en un rivet 37 coopérant avec les orifices 26 et 36. Le rivet permet de garder pour la partie d'articulation 31 une liberté de rotation autour d'un axe XX' perpendiculaire à l'axe longitudinal de l'aile de support 21.

Les moyens de verrouillage élastiques 4 comprennent un ressort à lame 40 et une liaison de verrouillage 9 constituée par des pattes de verrouillage 44, 45 prévus sur le ressort et coopérant avec des crans de blocage 34, 35 prévus sur les faces latérales de l'âme 30 de la pince au niveau de la partie d'articulation 31.

Le ressort à lame 40 est utilisé comme organe de blocage et n'a pas un rôle de ressort de rappel. Il est appliqué de façon amovible contre une grande face de la pièce 1. Son effort est alors exercé selon l'axe longitudinal de la canalisation. Il comprend une partie allongée 41a et une élément de prolongement 41b. Le ressort présente deux faces longitudinales opposées, l'une interne destinée à s'appuyer contre les surfaces de la pince fixe 2 et de la pince pivotante 3, et l'autre externe; l'axe longitudinal YY' du ressort est parallèle à l'axe longitudinal de l'aile 21 de la pince fixe.

La partie 41a est munie de deux portions en saillie 42; celles-ci servent de butées à la partie 41a pour limiter le débattement du ressort lorsqu'il est encastré sous le ressaut 25 de la pince fixe 2. L'élément de prolongement 41b comprend une ouverture 43 destinée au passage du rivet 37 lorsque le ressort est encastré sous le ressaut 25.

Les pattes de verrouillage 44, 45 situées sur l'élément de prolongement 41b sont recourbées extérieurement à la face interne du ressort perpendiculairement à l'axe longitudinal YY' et situées de part et d'autre de l'ouverture 43. Elles viennent s'encliqueter respectivement dans les crans de blocage 34, 35 afin de figer la rotation de la pince pivotante. L'âme 30 réalisant un angle droit avec l'aile 21 de la pince fixe, la section de l'étrier prend alors une forme rectangulaire, adaptée à celle de la canalisation.

Dans une variante, les pattes de verrouillage 44, 45 peuvent être situées sur la pince pivotante 3 et coopérer avec les crans de blocage 34, 35 établis sur le ressort 40.

Enfin l'élément 41b présente une languette 46 courbée extérieurement à la face externe du ressort. Cette languette permet à l'aide d'un simple outil de soulever le ressort et libérer ainsi les pattes de verrouillage 44, 45 des crans de blocage 34, 35 entraînant le déverrouillage de la pince pivotante.

Le fonctionnement du dispositif de l'invention va maintenant être décrit.

La pièce illustrée figure 3 sera de préférence utilisée pour la suspension de la canalisation 5 au support 5a, et la pièce illustrée figure 4, utilisée pour la suspension de l'appareil électrique 5b à la canalisation 5. Cette configuration combinée rend possible l'obtention d'un chemin 80 sur le dessus de la canalisation permettant ainsi l'addition de câbles supplémentaires.

Plusieurs pièces sont fixées au support 5a par vissage de l'élément de fixation 23a. La canalisation peut ainsi être suspendue.

La pince pivotante 3 est tout d'abord déverrouillée pour réaliser l'ouverture de l'étrier. A cette fin, on soulève la languette 46, à l'aide d'un tournevis par exemple, tout en tournant la pince pour la mettre en position d'ouverture. Dans le large intervalle ainsi dégagé entre les saillies fixe 22 et mobile 32 d'accrochage, on engage la canalisation 5 qui s'applique contre la pince fixe 2; l'aile 21 soutenant la paroi inférieure 53 de la canalisation, l'âme 20 s'appuyant contre la paroi latérale 51 ou 52, et la saillie d'accrochage 22 étant plaquée contre la paroi supérieure 54. On fait ensuite pivoter la pince 3 en direction de la paroi latérale opposée 52 ou 51 de la canalisation; la saillie d'accrochage 32 vient se plaquer contre la paroi supérieure 54. La pince pivotante est verrouillée lorsque les pattes de verrouillage 44, 45 du ressort sont enclenchées dans les crans de blocage 34, 35 de la pince, fermant ainsi l'étrier.

Une fois la canalisation fixée, on peut suspendre l'appareil électrique 5b de la même manière, en y ayant préalablement vissé l'élément de fixation 23b.

Les deux saillies d'accrochage 22 et 32 de l'étrier sont en regard et suffisamment éloignées pour ménager un espace libre 8 sur le dessus de la canalisation qui constitue le chemin 80, où peuvent se loger des câbles supplémentaires.

## Revendications

1. Pièce de suspension pour canalisation électrique préfabriquée comportant des pinces (2,3) entre lesquelles se loge une canalisation (5), et un élément de fixation (23) permettant la fixation de la canalisation (5) à un support (5a) et/ou la fixation d'un appareil électrique (5b) à la canalisation, caractérisée en ce que l'une au moins des pinces (2,3) est une pince pivotante assemblée et articulée à la pièce de suspension grâce à des moyens d'assemblage et de pivotement (6), et retenue en position de maintien sur la canalisation grâce à des moyens de verrouillage élastiques (4).

2. Pièce de suspension selon la revendication 1, caractérisée en ce que les pinces (2,3) comprennent une pince fixe (2) sur laquelle est assemblée et articulée la pince pivotante (3).

3. Pièce de suspension selon la revendication 1, caractérisée en ce qu'elle est formée par une pièce métallique plate obtenue par découpe.

4. Pièce de suspension selon l'une quelconque des revendications 1 à 3, caractérisée en ce que les moyens de verrouillage (4) consistent en un ressort à lame (40), et en une liaison de verrouillage (9) prévue entre le ressort (40) et la pince pivotante (3) pour bloquer la rotation de la pince (3) en position de maintien.

5. Pièce de suspension selon la revendication 4, caractérisée en ce que la liaison de verrouillage (9) comprend des crans de blocage (34,35) prévus sur la pince pivotante (3), et des pattes de verrouillage (44,45) prévues sur le ressort (40) et propres à s'encliqueter dans lesdits crans.

6. Pièce de suspension selon la revendication 4, caractérisée en ce que la liaison de verrouillage (9) comprend des crans de blocage (34,35) prévus sur le ressort (40), et des pattes de verrouillage (44,45) prévues sur la pince pivotante (3) et propres à s'encliqueter dans lesdits crans.

7. Pièce de suspension selon la revendication 4, caractérisée en ce que le ressort à lame (40) est appliqué de façon amovible contre une grande face de la pièce de suspension.

8. Pièce de suspension selon l'une quelconque des revendications précédentes, caractérisée en ce que les pinces (2,3) comprennent respectivement des saillies d'accrochage (22,32) pouvant venir en regard se plaquer contre une paroi supérieure de la canalisation, et ménageant sur le dessus de la canalisation un espace libre (8) adapté en position d'ouverture au passage de la canalisation et en position de maintien au logement de câbles supplémentaires.

9. Pièce de suspension selon la revendication 2, caractérisée en ce que les moyens d'assemblage et de pivotement (6) consistent en un rivet (37).

## Patentansprüche

1. Aufhängeteil für vorgefertigten Kabelkanal mit Klemmen (2, 3), zwischen denen ein Kanal (5) gelagert ist, und einem Befestigungselement (23), das die Befestigung des Kanals (5) an einem Träger (5a) und/oder die Befestigung eines Elektrogeräts (5b) am Kanal ermöglicht, dadurch gekennzeichnet, daß mindestens eine der Klemmen (2, 3) eine drehbare Klemme ist, die mit Montage- und Drehmitteln (6) montiert und dem Aufhängeteil angegliedert ist und mit elastischen Verriegelungsmitteln (4) in Halteposition auf dem Kanal festgehalten wird.

2. Aufhängeteil nach Anspruch 1, dadurch gekennzeichnet, daß die Klemmen (2, 3) eine feste Klemme (2) umfassen, an der die drehbare Klemme (3) montiert und angegliedert ist.

3. Aufhängeteil nach Anspruch 1, dadurch gekennzeichnet, daß es aus einem flachen, gestanzten Metallteil besteht.

4. Aufhängeteil nach einem der Ansprüche 1 bis 3, dadurch gekennzeichnet, daß die Verriegelungsmittel (4) aus einer Blattfeder (40) bestehen, und aus einer Verriegelungsverbindung (9), die zwischen der Feder (40) und der drehbaren Klemme (3) vorgesehen ist, um die Rotation der Klemme (3) in Halteposition zu blockieren.

5. Aufhängeteil nach Anspruch 4, dadurch gekennzeichnet, daß die Verriegelungsverbindung (9) Blockierkerben (34, 35) auf der drehbaren Klemme (3) umfaßt, sowie Verriegelungslaschen (44, 45) auf der Feder (40), die sich in die besagten Kerben einklinken können.

6. Aufhängeteil nach Anspruch 4, dadurch gekennzeichnet, daß die Verriegelungsverbindung (9) Blockierkerben (34, 35) auf der Feder (40) umfaßt, sowie Verriegelungslaschen (44, 45) auf der drehbaren Klemme (3), die sich in die besagten Kerben einklinken können.

7. Aufhängeteil nach Anspruch 4, dadurch gekennzeichnet, daß sich die Blattfeder (40) ablösbar gegen eine Breitseite des Aufhängeteils abdrückt.

8. Aufhängeteil nach einem der vorstehend genannten Ansprüche, dadurch gekennzeichnet, daß die Klemmen (2, 3) jeweils sich gegenüberliegende Einhängevorsprünge (22, 32) umfassen, die sich gegen die obere Wand des Kanals abdrücken und auf dem Kanal einen Freiraum (8) schaffen, der in Öffnungsposition die Durchführung des Kanals und in Halteposition die Verlegung von zusätzlichen Kabeln ermöglicht.

9. Aufhängeteil nach Anspruch 2, dadurch gekennzeichnet, daß die Montage- und Drehmittel (6) aus einer Niete (37) bestehen.

## Claims

1. Suspension part for pre-fabricated electric ducts featuring clamps (2, 3), between which a duct (5) is housed, and an attachment element (23) which allows the duct (5) to be attached to a support (5a) and/or an electrical appliance (5b) to be attached to the duct, characterized in that at least one of the clamps (2, 3) is a pivoting clamp assembled and hinged onto the suspension part by means of assembly and hinge parts (6), and held in a support position on the duct by means of elastic locking parts (4).

2. Suspension part according to claim 1, characterized in that the clamps (2, 3) have a fixed clamp (2) on which the pivoting clamp (3) is assembled and hinged.

3. Suspension part according to claim 1, characterized in that it is made from a flat, stamped, metal part.

4. Suspension part according to any of claims 1 to 3, characterized in that the locking parts (4) are composed of a leaf spring (40) and a locking link (9) fitted between the spring (40) and the pivoting clamp (3), to lock the rotation of the clamp (3) in a support position.

5. Suspension part according to claim 4, characterized in that the locking link (9) has lock notches (34, 35) on the pivoting clamp (3), and locking lugs (44, 45) on the spring (40) which can interlock in the said notches.

6. Suspension part according to claim 4, characterized in that the locking link (9) has lock notches (34, 35) on the spring (40) and locking lugs (44, 45) on the pivoting clamp (3) which can interlock in the said notches.

7. Suspension part according to claim 4, characterized in that the leaf spring (40) is pressed in a movable position against a large face of the suspension part.

8. Suspension part according to any of the previous claims, characterised in that the clamps (2, 3) respectively have attachment lips (22, 32) which can come flat against the upper side of the duct and create a space (8) on top of the duct, adapted in the open position to let the duct pass and in the support position to house extra cables.

9. Suspension part of claim 2, characterised in that the assembly and pivoting parts (6) consist of a rivet (37).
